# EUROPÄISCHE PATENTANMELDUNG

(11) **EP 1 674 802 A2**
(43) Veröffentlichungstag der Anmeldung: **28.06.2006**
(21) Anmeldenummer: 05405712.0
(22) Anmeldetag: 21.12.2005
(51) Int. Cl.: F24F 5/00

(54) **Multifunktionale Zentrale für Heizung und/oder Kühlung in Wohnbauten**

(30) Priorität: 21.12.2004 CH 21152004
(71) Anmelder: Titano SA, 6864 Arzo (CH)
(72) Erfinder: Caverzasco, Aurelio, 6864 Arzo (CH)
(74) Vertreter: Gaggini, Carlo

(57) **Zusammenfassung**

Die vorliegende Erfindung betrifft eine Zentrale für Heizung und/oder Kühlung in Wohnbauten und umfasst die folgenden Komponenten:
- einen Kaltspeicher (2)
- einen Kombi-Boiler (5, 6)
- einen Heizkreislauf zur Beheizung der Räume (7)
- eine Einrichtung zur Erzeugung von Heisswasser für den Haushalt (11)
- eine Wasser/Wasser-Wärmepumpe (4)
- eine Luft/Wasser-Wärmepumpe (3)
- ein Steuergerät (12)
wobei die Komponenten (1-11) untereinander mit Leitungen verbunden sind, die einen in Funktion der äusseren atmosphärischen Bedingungen veränderbaren Wärmetausch zwischen ihnen sicherstellen.

Die erfindungsgemässe Zentrale nutzt die emeuerbaren Energien in optimaler Weise, erzeugt keine schädlichen Emissionen und keine Lärmbelästigung, da sie sehr sparsam bloss elektrische Energie verwendet, und den restlichen Energiebedarf mittels Sonnenkollektoren gewinnt, oder aus der Umgebung mittels einer Luft/Wasser-Wärrnepumpe.

Wirtschaftlich betrachtet amortisiert sich die erfindungsgemässe Zentrale rascher als jene gemäss bekannten Lösungen.

## Beschreibung

Die vorliegende Erfindung betrifft Anlagen zur Heizung - während der kalten Jahreszeit - und/oder zur Kühlung - in der warmen Jahreszeit - in Wohnbauten wie Einfamilienhäusern, Mehrfamilienhäusern, Verwaltungsbauten, Ladengeschäften, Restaurants, öffentlichen Räumen, Hallenbädern oder Schwimmbädern im Freien, usw.

Aus der Praxis sind bereits eine ganze Reihe von technischen Lösungen bekannt, die dieses Problem angehen, von denen einige, wie jene, die Gegenstand der vorliegenden Erfindung ist, auch die sogenannten alternativen oder emeuerbaren Energien einsetzen, wie die mittels Solarkollektoren ausgenützte Sonnenenergie oder mittels Luft/Wasser- oder Wasser/Wasser-Wärmepumpen gewonnene Energie. Von all diesen Anwendungen - die dem Fachmann auf dem Gebiet wohlbekannt sind - existieren unzählige ausgeführte Anlagen, und diese werden zum besseren Vergleich mit dem Stand der Technik im Folgenden in der Beschreibung der vorliegenden Erfindung erwähnt. Die bekannten Lösungen sind jedoch noch nicht zufriedenstellend, da sie Nachteile aufweisen - wie dies im Folgenden bei der Beschreibung der zutreffendsten Beispiele im Einzelnen aufgezeigt wird - im Zusammenhang mit den folgenden Hauptaspekten der herkömmlichen Anlagen:
a) Diese benötigen immer noch den Einsatz nicht-emeuerbarer Energien, wie Erdöl oder Erdgas (wobei es um alle Anlagen geht, die noch einen Brenner aufweisen),
b) Diese verwenden die Quellen der erneuerbaren Energien (beispielsweise Sonnenenergie) bloss als Unterstützung und nicht als Hauptträgen der Anlage, in welchem Fall regelmässig die Situation eintritt, dass Wärmeenergie gerade zu Zeiten zur Verfügung gestellt wird, wenn die Sonne scheint, also dann, wenn sie am wenigsten nötig ist. Solche Anlagen kosten femer so viel, dass ihre Amortisation innert nützlicher Frist nicht garantiert werden kann.
c) Falls als altemative Energie die Gewinnung von Erdwärme mittels geothermischer Sonden vorgesehen ist, treten juristische Probleme auf, da eine Bewilligung zu beschaffen ist und vor allem wirtschaftliche Probleme, da solche Lösungen recht kostspielig und wenig lohnend sind.
d) Die Verwendung von Luft/Wasser-Wärmepumpen als einzige Wärmequelle bringt darüber hinaus grosse Probleme bezüglich Lärmbelästigung mit sich, welche die praktische Anwendung problematisch machen.

Die vorliegende Erfindung schlägt daher vor, eine multifunktionale Zentrale zur Beheizung und/oder Kühlung in Wohnbauten zu schaffen, die im Stande ist, alte Einschränkungen der bekannten Technik zu überwinden und insbesondere das Erreichen folgender Ziele sicherzustellen:

### Kalte Jahreszeit (Winter):

- Wärmerzeugung für Warmwasser und Gebäudeheizung und allenfalls für das Hallenbad,

### Warme Jahreszeit (Sommer):

- Wärmerzeugung für Warmwasser und allenfalls für das Hallenbad oder das Bassin im Freien und für die Kühlung des Gebäudes,
alles unter Verwendung einer einzigen Primärenergie-Quelle, nämlich der elektrischen Energie, wobei zu 100% emeuerbare Energien ausgenützt werden, und wobei jede Belästigung durch CO₂-Emissionen vermieden und die Lärmbelästigung auf ein Minimum reduziert wird. Darüber hinaus muss es möglich sein, jede Art von altemativer Energie zu verwenden (beispielsweise direkte geothermische Energie, Wärmepumpe, Solarkollektoren bzw. -Solarpanels jeder Art, was bedeutet, dass alle diese Energiequellen optimal in die erfindungsgemässe Zentrale integriert werden können.

Die Vorteile, die sich gegenüber den Lösungen gemäss dem Stand der Technik ergeben, werden anhand einiger praktischer Beispiele konventioneller Anlagen erläutert, die im folgenden beschrieben werden.

Diese Ziele werden erreicht mittels einer multifunktionalen Zentrale gemäss dem Oberbegriff des Patentanspruchs 1 und mit den Eigenschaften entsprechend dem kennzeichnenden Teil des Patentanspruchs 1.

Vorab sei festgestellt, dass die erfindungsgemässe Zentrale keinerlei Apparate enthält, die mit nicht-emeuerbarer Energie betrieben wird (Öl oder Gasbrenner), was bereits die Realisierung eines grossen Teils der gewünschten Vorteile erlaubt. Die ausgewogene Kombination der übrigen Komponenten der Zentrale und deren Betriebsweise in Abhängigkeit von den herrschenden äussem atmosphärischen Bedingungen sind es, worin der Schlüssel zum Erreichen der Ziele der vorliegenden Erfindung liegt, wie dies anhand eines praktischen Realisierungsbeispiels und seinem Betriebsverhatten unter verschiedenen klimatischen Bedingungen im Folgenden beschrieben wird.

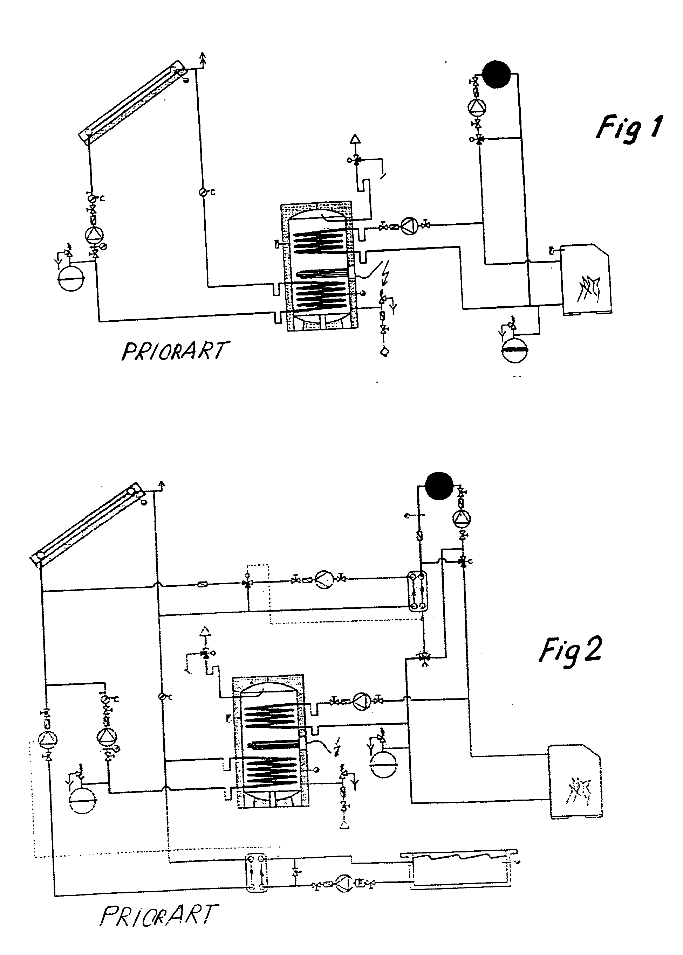

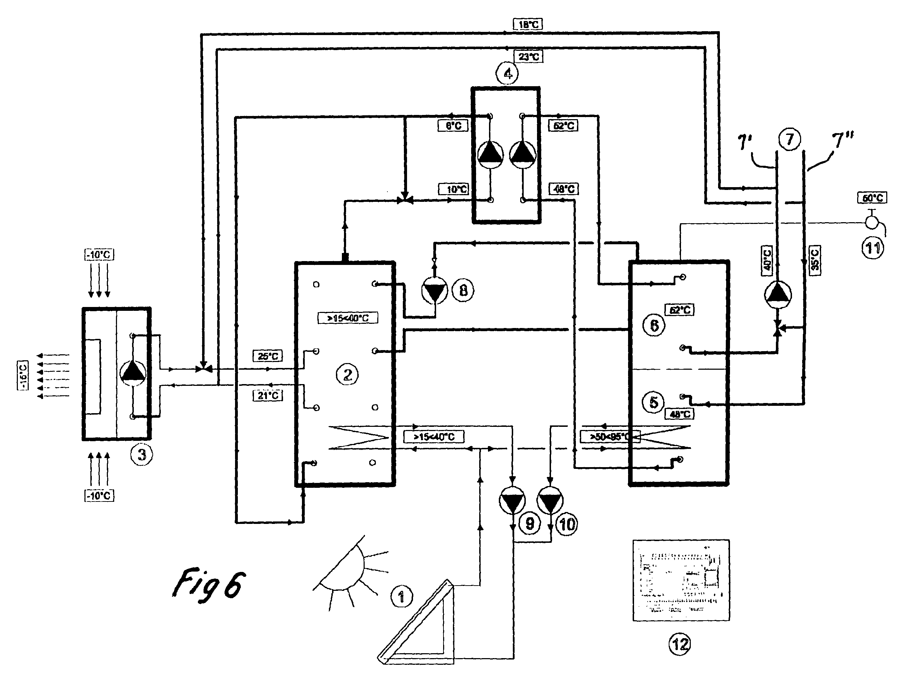

Bevor die erfindungsgemässe Lösung beschrieben wird, sei zuerst anhand einiger praktischer Beispiele, welche als dem Stand der Technik entsprechende Lösungen bekannt sind, erläutert und in den Figuren 1 bis 5 illustriert, wie diese zur Verwendung altemativer Energien zu Heizzwecken eingesetzt werden, während in der Fig. 6 anhand eines Grundschemas die Prinzipien der vorliegenden Erfindung dargestellt sind.

In der Fig. 1 ist eine erste bekannte Lösung schematisch dargestellt, die für die Integration eines Öl- oder Gas-Heizkessels mit Solarkollektoren ausgelegt ist.

Die Anwendung dieses Systems setzt die Solarenergie als zusätzlichen Wärme-Lieferanten zum Heizkessel oder anderen Wärmeerzeugern ein, welche die Temperatur im Akkumulator-Speicher stets auf> 50°C halten.

Der Nachteil dieser Lösung liegt darin, dass die Sonnenenergie nur bei starker Sonneneinstrahlung verwendet wird, und darin, dass die CO₂-Emissionen immer noch während der ganzen Winterszeit in die Atmosphäre gehen.

Die Energieeinsparung ist daher auf die mittleren und sommerlichen Jahreszeiten begrenzt, wenn die erneuerbare Energie den Warmwasserbedarf decken kann, während der Energiebedarf für die Heizung nur teilweise gedeckt wird.

An Energien werden dabei verwendet:
- Anwendung emeuerbarer Energie ― Erdöl ― Erdgas
- Elektrische Energie
- Die Sonnenenergie dient bloss zur Unterstützung, jedoch nicht als aktiver Teil der Anlage: man erhält daher einen Wärmeenergie-Überfluss dann, wenn er nicht benötigt wird
- Die Anlagekosten erlauben keine sinnvolle Amortisationsrechnung, da der Energiespareffekt im Verhältnis zur Investition sehr klein ist.

In der Fig. 2 ist eine Lösung ebenfalls in schematischer Darstellung gezeigt, mit einer Heizung, in der ein Erdöl- oder Erdgas-Heizkessel mit Solarkollektoren (irgendwelchen Typs) integriert ist, und mit Schwimmbadbeheizung.

Diese Lösung unterscheidet sich bezüglich der verwendeten Energien und der sich daraus ergebenden Nachteile wenig von dem in der Fig. 1 gezeigten Beispiel. Der einzige Unterschied ist die Möglichkeit, während der Sommerzeit ein Schwimmbad zu heizen, also gerade dann, wenn die Verfügbarkeit kalorischer Energie auf jeden Fall maximal ist, weshalb deren Verwendung keinen grossen Vorteil bringt.

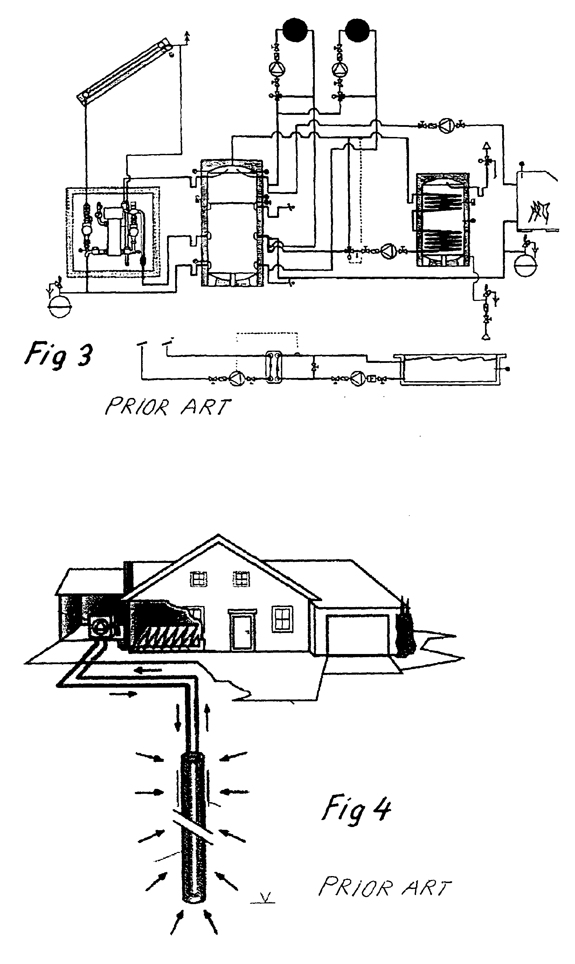

Eine andere bekannte Lösung ist im Schema in der Fig. 3 gezeigt, worin die Erzeugung von Warmwasser vorgesehen ist, in welcher ein Schichtspeicher für die Heizung und ein Boiler für das Haushalt-Heisswasser integriert sind.

Die Anwendung dieses Systems verwendet die Solarenergie als zusätzlichen Wärme-Lieferanten zum Wärmespeicher mit integriertem Boiler. Ein Heizkessel oder ein anderer Wärmeerzeuger halten die Temperatur im Akkumulator stets auf > 50°C.

Der Nachteil dieser Lösung besteht auch hier darin, dass wie in den vorher genannten Lösungen die Solarenergie lediglich bei intensiver Sonneneinstrahlung genutzt wird, und dass die CO₂-Emissionen immer noch während der ganzen Winterszeit in die Atmosphäre gehen.

Die Energieeinsparung ist daher auf die mittleren und sommerlichen Jahreszeiten beschränkt, wenn auch die emeuerbare Energie den Warmwasserbedarf decken kann, während der Energiebedarf für die Heizung nur teilweise gedeckt wird.

Diese Lösung gleicht bezüglich der verwendeten Energiequellen und der entsprechenden Nachteile sehr den vorher beschriebenen Lösungen: Auch hier sind die Anlagekosten fallen so hoch an, dass jede realistische Wirtschaftlichkeitsrechnung sinnlos wird.

In der Fig. 4 ist sodann eine Lösung dargestellt, wiederum schematisch, welche oft der Idealvorstellung vieler Interessenten entspricht, nämlich jene Lösung, bei der die Erzeugung von Heisswasser und die Heizung mittels einer Wärmepumpe bewerkstelligt werden, welche geothermische Energie aus der Erde holt.

Im Erdreich herrscht während des ganzen Jahrs eine praktisch konstante Temperatur. Von der ganzen Erdmasse weisen 99% eine Temperatur über 1000°C auf, und so ist es möglich, die Wärme des Untergrundes mittels einer einfachen Wärmetransport-Sonde, die in den Untergrund reicht, und einer Wärmepumpe nutzbar zu machen.

Zum Anheben der Temperatur ist eine Wasser/Wasser-Wärmepumpe erforderlich, welche die von der Erdsonde gelieferte Wärme im Temperaturniveau anhebt und an den Heizkreislauf abgibt. Wärmepumpen sind dafür bekannt, dass sie eine der vielversprechendsten und wirtschaftlichsten Technologien zum Ausschalten schädlicher Emissionen darstellen, einschliesslich solcher von Treibhausgasen (beispielsweise von CO₂). Die Entname von geothermischer Energie (Erdwärme) ist daher eine ökologisch günstige Gewinnung erneuerbarer Energie. Die während des ganzen Jahres praktisch konstante Temperatur im Erdreich erlaut es, mit der Wärmepumpe auch mitten im Winter hohe Wirkungsgrade zu erreichen, wobei der Verbrauch an elektrischer Energie lediglich ein Vertel der an die Heizanlage gelieferten Energiemenge beträgt. Dennoch müssen zur Erzeugung der im Haushalt benötigten Energie die Wasser/Wasser-Wärmepumpe und die Zirkulationspumpe der Erdsonde das ganze Jahr durch in Betrieb sein.

Für die Bohrung im Untergrund sind spezielle Bewilligungen einzuholen, welche nicht in allen Fällen erteilt werden, wegen der Struktur des Untergrunds und wegen der Gefahr von Verunreinigungen (infolge der Verwendung von Glykol-Wasser als Wärmetransportflüssigkeit in der Erdsonde).

Darüber hinaus besteht die Gefahr, dass Erdbewegungen im Untergrund einen Bruch der Erdsonde verursachen können, welche dadurch unbrauchbar wird.

Hingegen werden dabei folgende Energien verwendet, was folgende Nachteile bringt:
- Elektrische Energie
- Erdwärme
- Kosten der Bohrung, die enorm belastend sind, und Bewilligungen, die nicht immer überall erteilt werden.

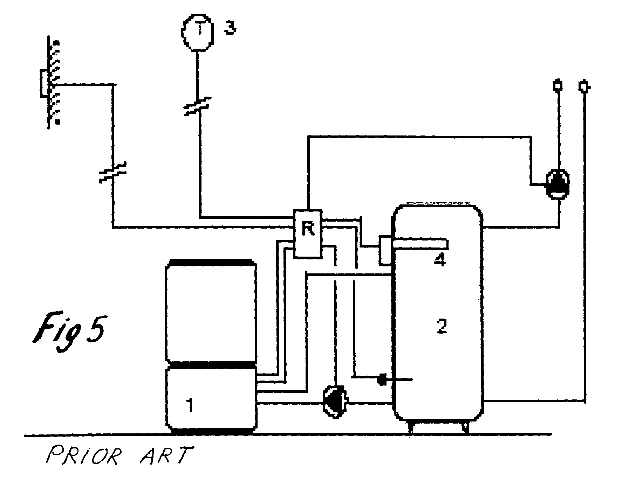

In der Fig. 5 ist eine weitere gemäss dem Stand der Technik bekannte Lösung, bei welcher eine Luft/Wasser-Wärmepumpe vorgesehen ist, mit einem PufferSpeicher für die Heizung und für die Erzeugung von Warmwasser.

In diesem Fall wird die Umgebungsluft während des ganzen Jahres dazu verwendet, die Temperatur anzuheben. Deshalb wird eine Luft/Wasser-Wärmepumpe benötigt, welche aus der Umgebungsluft Wärme übemimmt und an einen Heizkreislauf abgibt. Wärmepumpen repräsentieren bekanntlich eine der meistversprechenden und wirtschaftlich interessantesten Technologien zur Begrenzung der Schadstoffemissionen, einschliesslich der Treibhausgase (beispielsweise CO₂).

Die Entnahme von Energie aus der Umgebungsluft ist daher ein ökologisch günstiger Prozess zur Gewinnung emeuerbarer Energie.

Dabei ist jedoch die Lufttemperatur über das Jahr nicht konstant, weshalb die Wärmepumpe nicht während des ganzen Jahres gute Wirkungsgrade auch mitten im Winter erreichen kann (Auftauen, konstante Temperaturen < der Norm, usw.). Solche Wärmepumpen erreichen deshalb nur während den Übergangs-Jahreszeiten und während des Sommers hohen Wirkungsgrad, also während den Monaten, während welchen ein Energieüberschuss nicht benötigt wird und die Wärmepumpe überdimensioniert zu sein scheint.

Der Lärmpegel und die Umwelteinflüsse der Luft/Wasser-Wärmepumpe sind vertieft zu studieren, damit die zugelassenen 39 bis 40 dBA nicht überschritten werden und keine Klagen und Reklamationen aus der Nachbarschaft wegen des Lärms hervorgerufen werden.

Zur Erzeugung der im Haushalt benötigten Energie muss die Luft/Wasser-Wärmepumpe während des ganzen Jahres in Betrieb stehen, ausser wenn das Heisswasser für den Haushalt mit einer direkt in den Boiler eingebauten elektrischen Widerstandsheizung erzeugt wird.

An Energieformen werden dabei verwendet:
- Elektrische Energie für die Wärmepumpe und für die direkte Widerstandsheizung während der Sommerzeit,
- Energie aus der Umgebungsluft.

Die Lösungen gemäss den Figuren 1 bis 5, die den neusten Stand der Technik verkörpern, und bei denen die ausgefeiltesten bekannten Komponenten verwendet werden, wie Wärmepumpen, geothermische Erdsonden, usw., haben in der praktischen Anwendung wenig Erfolg gehabt, weil sie auch den Einsatz nicht-erneuerbarer Energie (siehe die Fig. 2) erfordern und deshalb Probleme bezüglich Luftverschmutzung mit sich bringen, oder hohe Kosten verursachen, was deren Wirtschaftlichkeit (siehe die Fig. 4) beeinträchtigt oder (siehe die Fig. 5) schwer lösbare Lärmbelästigungsprobleme verursachen.

Dabei handelt es sich um Lösungen, die nur unter bestimmten klimatischen Bedingungen optimal arbeiten (beispielsweise im Winter und in den Übergangszeiten), jedoch während der übrigen Zeit überdimensioniert sind.

Die vorliegende Erfindung, mittels welcher die genannten Nachteile der verschiedenen bekannten Lösungen überwunden werden sollen, und mittels welcher die oben genannten Ziele zu erreichen sind, erlaubt es, über alle Jahreszeiten optimale Betriebsbedingungen zu realisieren, wie dies im Folgenden in der Beschreibung der Funktionsweise der erfindungsgemässen Zentrale erläutert werden soll.

Die erfindungsgemässe Lösung ist in der Fig. 6 schematisch gezeigt, in welcher alle Komponenten, welche die Zentrale umfasst, mit den jedem Fachmann auf dem Gebiet bekannten Symbolzeichen dargestellt sind, und mit den entsprechenden Verbindungen (Rohre) für den Transport der verschiedenen Flüssigkeiten (Wasser für die Heizung, Glykol-Wasser für den Solarkollektor-Kreislauf).

Die Elemente der Zentrale können, müssen aber nicht, in einem einzigen Geräteschrank untergebracht sein, weshalb in der Fig. 6 auf die Andeutung deren Umgrenzung verzichtet wurde. Offensichtlich werden die Sonnenkollektoren 1 vorzugsweise auf dem Dach bzw. an einer Aussenfläche des Gebäudes montiert, und vorzugsweise wird die Luft/Wasser-Wärmepumpe 3 ausserhalb des Gebäudes aufgestellt.

Die erfindungsgemässe multifunktionale Zentrale, die im Winter die Beheizung der Räume und im Sommer deren Kühlung ermöglicht, setzt sich aus den folgenden Komponenten zusammen, die untereinander mittels den in der Fig. 6 angedeuteten Verbindungsleitungen verbunden sind:
- ein Wärmespeicher 2, gespeist mit einer Wärmeträger-Flüssigkeit (in der Regel Wasser) bei einer Temperatur von weniger als 40°C aus extemen Wärmequellen 1, 3. Dieser Wärmespeicher wird auch Kaltspeicher genannt, da er auf tiefem Temperatumiveau arbeitet,
- ein Wärmespeicher 5, 6 mit integriertem Boiler 6 zur Erzeugung von Heisswasser für den Haushalt. Dieser Wärmespeicher wird auch Kombi-Boiler genannt, was seine Funktion als Boiler unterstreicht,
- Heiz- und/oder Kühlkreislauf für die Räume 7 mit Zuleitung 7' (Vorlauf) und einer Rückleitung 7" (Rücklauf),
- Eine Heisswasser-Leitung 11 für den Haushalt vom Kombi-Boiler 6 aus.
- eine Wasser/Wasser-Wärmepumpe 4,
- eine Luft/Wasser-Wärmepumpe 3, thermisch verbunden mit der Wasser/Wasser-Wärmepumpe 4,
- ein Steuergerät 12, in der Fig. 6 rein schematisch und ohne alle zur Steuerung der Komponenten der beschriebenen Zentrale nötigen elektrischen und elektronischen Verbindungsleitungen. Diese Verbindungsleitungen entsprechen der normalen Steuerungstechnik und sind jedem Fachmann auf dem Gebiet bekannt, weshalb sich hier eine genauere Beschreibung der entsprechenden Schaltkreise erübrigt.

Die multifunktionale Zentrale funktioniert je nach den klimatischen Bedingungen in verschiedener Weise, jedoch immer derart, dass wirtschaftlicher Betrieb und grosse Flexibilität sichergestellt bleiben. So ermöglicht die Anlage beispielsweise, die Räume im Winter zu heizen und im Sommer zu kühlen, wobei im Kreislauf 7 Wasser umgewälzt wird, das mittels der LuftNVasser-Wärmepumpe gekühlt wurde.

Die erfindungsgemässe Zentrale funktioniert in folgender Weise:

### 1. Im Winter

Die Solarkollektoren liefern die thermische Energie, die mittels Solarkoltektoren 1 im Kaltspeicher 2 auf tiefer Temperatur von 8-12°C gespeichert wird.

Wenn die Sonneneinstrahlung ungenügend ist oder fehlt, vergrössert sich der konvektive Teil der Wärmeaufnahme in den Sonnenkollektoren 9, und dies erlaubt, Energie direkt aus der Umgebung aufzunehmen.

Fehlt die Sonneneinstrahlung oder die Energieaufnahme von Energie aus der Umgebung ganz, so aktiviert sich die Luft/Wasser-Wärmepumpe 3, um den Kaltspeicher von 15 auf 25°C zu bringen.

Die im Kaltspeicher gespeicherte Energie wird mittels der Wasser/Wasser-Wärmepumpe 4 für die Heizung 7 verwendet und zur Erzeugung von Warmwasser 11 sowie zur Erwärmung von Hallenbädern.

### 2. In der Überaanaszeit

Die auf tiefer Temperatur von 8-12°C mittels Solarkollektoren 1 gewonnene Energie wird im Kaltspeicher 2 gespeichert.

Wenn die Sonneneinstrahlung ungenügend ist oder fehlt, vergrössert sich der konvektive Teil der Wärmeaufnahme in den Sonnenkollektoren 9, und dies erlaubt, Energie direkt aus der Umgebung aufzunehmen.

Fehlt die Sonneneinstrahlung ganz, so aktiviert sich die Luft/Wasser-Wärmepumpe 3, um den Kaltspeicher von 15 auf 25°C zu bringen.

Die im Kaltspeicher gespeicherte Energie wird mittels der Wasser/Wasser-Wärmepumpe 4 für die Heizung 7 verwendet und zur Erzeugung von Warmwasser 11 sowie zur Erwärmung von Hallenbädern.

Wenn im Kaltspeicher die ldealtemperatur 35-38°C erreicht ist, wird die Solarenergie direkt an den Kombi-Boiler weitergegeben für die Erzeugung von Warmwasser für die Heizung von Schwimmbädern im Freien oder von Hallenbädern verwendet.

### In diesem Fall arbeiten die Wärmepumpen 4 und 3 nur zeitweise.

### 3. Im Sommer

Sobald im Kaltspeicher die Idealtemperatur 35-38°C erreicht ist, wird die Solarenergie direkt an den Kombi-Boiler 6, 5 weitergegeben für die Heizung 7, die Erzeugung von Warmwasser 11, und für die Heizung von Schwimmbädern im Freien oder von Hallenbädern verwendet. Die Kühlung des Gebäudes wird mit Hilfe der Luft/Wasser-Wärmepumpe 3 bewerkstelligt, um dem Fussboden mittels der darin verlegten Schlangenleitung zu kühlen, oder die Kühlung via Ventilationskonvektoren zu aktivieren.

### Die Wasser/Wasser-Wärmepumpe 4 ist während der Sommerzeit ausser Betrieb.

### Die Luft/Wasser-Wärmepumpe 3 arbeitet im Kühlbetrieb.

Die Vorteile der erfindungsgemässen multifunktionellen Zentrale gegenüber dem heutigen Stand der Technik sind:
a) Die Zentrale kann aus einer einzigen Einheit bestehen, in der alle nötigen Elemente untergebracht sind, die nötig sind für ihren Betrieb und für die Steuerung aller Funktionen der Anlage mittels einer integrierten elektronischen Steuerung.
b) Verwendung herkömmlicher Energieträger wie Erdöl, und Erdgas ist nicht erforderlich, und elektrische Energie wird mit einer Einsparung von etwa 55 bis 70% verwendet.
c) Erneuerbare Energien werden ohne Eingriff oder Veränderung im natürlichen Zustand der Umwelt ausgenützt.
d) Jede Beeinträchtigung der Umwelt und Lärmbelästigung wird vermieden.
e) Die Wärmeerzeugung ist langfristig sichergestellt, wobei der Aufwand für Unterhalt äusserst begrenzt bleibt.
f) Grösstmögliche Energieeinsparungen sind erreichbar dank der Verwendung der Sonnenenergie, der Umgebungsenergie bei tiefer Temperatur und mit der Wasser/Wasser-Wärmepumpe und der Luft/Wasser-Wärmepumpe.
g) Die Kosten für Emissionskontrollen der schädlichen CO₂ entfallen, ebenso wie Heizkesselkontrollen, Kaminreinigung, Brandschutz.
h) Die verwendete zur Deckung des Bedarfs benötigte Energie ist zu 100% emeuerbar und reduziert die Schadstoffemission auf 0%.
i) Die Anlageinvestitionen liegen etwas höher im Vergleich zu einer traditionellen Heizzentrale, die mit Heizöl arbeitet; die Anlage bietet jedoch den Vorteil der Platzeinsparung (Tankraum, Kamin, Baukosten pro m², usw.).
j) Die Anlage verwendet nur eine einzige Primärenergiequelle - Elektrische Energie.

Die Zentrale kann darüber hinaus für den Wärmeenergie-Gewinnung aus folgenden Quellen ausgelegt werden:
1. Sonnenkollektoren (mit Wasser)
2. Fotovoltaische Solarpanels (Energieversorgung für die verschiedenen elektrischen Apparate
3. Umgebungsluft mittels Luft/Wasser-Wärmepumpe bis 15-20°C
4. Kühlkreislauf eines Wärmetauschers
5. Kreislauf eines Abwärmerückgewinnungs-Wärmetauschers
6. Kreislauf eines Wärmerückgewinnungs-Wärmetauschers im Kamin
7. Jeglicher Flüssigkeitskreislauf, der Wärmeenergie aus irgendeiner andern Quelle aufnimmt.

## Patentansprüche

1. Multifunktionale Zentrale für Heizung und/oder Kühlung in Wohnbauten mit den folgenden Komponenten:
- ein Wärmespeicher (2) gespeist mittels einem Wärmetransportmittel auf einer Temperatur von weniger als 40°C aus extemen Wärmequellen (1, 3) (auch Kaltspeicher genannt),
- ein Wärmespeicher (5, 6) in Kombination mit einem integrierten Boiler (6) zur Erzeugung von Warmwasser für den Haushalt (auch Kombi-Boiler genannt),
- ein Kreislauf zur Heizung und/oder Kühlung (7) mit einer Vorlaufleitung (7') und einer Rücklaufleitung (7"),
- eine Leitung zur Versorgung mit Haushaltwasser (11) aus dem Kombi-Boiler (6),
- eine Wasser/Wasser-Wärmepumpe (4),
- eine Luft/Wasser-Wärmepumpe (3), thermisch verbunden mit der WasserlWasser-Wärmepumpe (4),
- ein Steuergerät (12), elektrisch verbunden mit den die Anlage bildenden Komponenten und mit einer Steuerungselektronik für die Gesamtsteuerung der Komponenten zur Regelung der Klimabedingungen im Gebäudeinnem in Abhängigkeit von den ausserhalb des Gebäudes herrschenden atmosphärischen Bedingungen,
- Verbindungsleitungen zwischen den Komponenten (1-11) der Anlage zum Sicherstellen des Wärmetausches zwischen ihnen in Funktion der ausserhalb des Gebäudes herrschenden atmosphärischen Bedingungen.

2. Zentrale gemäss dem Anspruch 1,
**dadurch gekennzeichnet, dass**
die externe Wärmequelle aus einer Gruppe von Solarkollektoren (1) mit Glykol/Wasser-Kreislauf besteht, die in der Lage ist sowohl den Kaltspeicher (2) als auch den Kombi-Boiler (5, 6) über geeignete Ventile (9) bzw. (10) mit Wärme zu versorgen.

3. Zentrale gemäss dem Anspruch 1,
**dadurch gekennzeichnet, dass**
die Quelle extemer Wärme durch die Luft/Wasser-Wärmepumpe (3) gebildet wird.
